# EUROPEAN PATENT APPLICATION

(11) **EP 4 529 080 A1**
(43) Date of publication of application: **26.03.2025**
(21) Application number: 23806529.6
(22) Date of filing: 09.02.2023
(51) Int. Cl.: H04L 9/32, H04L 9/40, H04L 67/10

(54) **BLOCKCHAIN CONSENSUS METHOD AND APPARATUS**

(30) Priority: 20.05.2022 CN 202210549682
(71) Applicant: Tsinghua University, Beijing 100084 (CN); Digital Currency Institute, The People's Bank of China, Beijing 100071 (CN)
(72) Inventor: DUAN, Sisi, Beijing 100084 (CN); WANG, Xiaoyun, Beijing 100084 (CN); MU, Changchun, Beijing 100084 (CN); DI, Gang, Beijing 100084 (CN)
(74) Representative: Boult Wade Tennant LLP
(86) International application number: PCT/CN2023/075125
(87) International publication number: WO 2023/221567

(57) **Abstract**

Disclosed by the present disclosure are a blockchain consensus method and apparatus, in which the method comprises: broadcasting, by each blockchain replica node in an asynchronous network, a proposal message corresponding to the blockchain replica node in a current epoch corresponding to the blockchain replica node, forming a weak certificate corresponding to the blockchain replica node in the current epoch after collecting signature voting information fed back by f+ 1 blockchain replica nodes based on the proposal message, and entering a next epoch after collecting the proposal messages broadcasted by 2f+1 blockchain replica nodes in the current epoch; and performing a blockchain consensus for each blockchain replica node in the asynchronous network after receiving the weak certificates of the same epoch broadcasted by 2f+ 1 blockchain replica nodes. The present disclosure can effectively improve the consensus efficiency and the transaction throughput.

## Description

### TECHNICAL FIELD

The present disclosure relates to the technical field of blockchain, and particularly to a blockchain consensus method and apparatus.

### BACKGROUND

This section is intended to provide background or context for the embodiments of the present disclosure set forth in the claims. The description here is not admitted as prior art by inclusion in this section.

Consensus is one of the most basic problems in the fault-tolerant distributed computation. The realization of consensus enables all processes in a distributed system to reach a consensus on a common value. The BFT (Byzantine Fault Tolerance) consensus is formally put forward by Lamport, Shostak and Pease under the background of Byzantine faults, and has been widely used in distributed systems after decades of researches in academic and industrial circles. In recent years, with the rise of blockchain technologies, the BFT protocol is considered as a standard model of alliance chain.

The classic Byzantine Fault Tolerance (BFT) State Machine Replication (SMR) protocol relies on a stable leader to implement the driver protocol, and other replicas vote on a proposal put forward by the leader until the view changes. Assuming that the consensus system includes n nodes in total, where n=3f+1, in the existing BFT protocol, no matter how many rounds of voting are needed to reach a consensus, the leader needs to collect at least 2f+1 votes from different replicas to form a certificate for a block, which has the problems of low consensus efficiency and low transaction throughput.

Therefore, there is an urgent need for a blockchain consensus solution that can overcome the above defects.

### SUMMARY

The embodiments of the present disclosure provide a blockchain consensus method, which is used to achieve a blockchain consensus and improve the consensus efficiency and transaction throughput. The method includes:
broadcasting, by each blockchain replica node in an asynchronous network, a proposal message corresponding to the blockchain replica node in a current epoch corresponding to the blockchain replica node, forming a weak certificate corresponding to the blockchain replica node in the current epoch after collecting signature voting information fed back by f+1 blockchain replica nodes based on the proposal message, and entering a next epoch after collecting the proposal messages broadcasted by 2f+1 blockchain replica nodes in the current epoch, where the proposal message corresponding to the blockchain replica node includes proposal information selected from a pending transaction queue in the current epoch, and a blockchain includes 3f+1 blockchain replica nodes; and
performing, by each blockchain replica node in the asynchronous network, a blockchain consensus after receiving the weak certificates of the same epoch broadcasted by 2f+ 1 blockchain replica nodes.

The embodiments of the present disclosure provide a blockchain consensus apparatus, which is used to achieve blockchain consensus and improve the consensus efficiency and transaction throughput. The apparatus includes:
a transaction transmission module configured to broadcast, by each blockchain replica node in an asynchronous network, a proposal message corresponding to the blockchain replica node in a current epoch corresponding to the blockchain replica node, form a weak certificate corresponding to the blockchain replica node in the current epoch after collecting signature voting information fed back by f+ 1 blockchain replica nodes based on the proposal message, and enter a next epoch after collecting the proposal messages broadcasted by 2f+ 1 blockchain replica nodes in the current epoch, where the proposal message corresponding to the blockchain replica node includes proposal information selected from a pending transaction queue in the current epoch, and a blockchain includes 3f+ 1 blockchain replica nodes; and
a node consensus module configured to perform, by each blockchain replica node in the asynchronous network, a blockchain consensus after receiving the weak certificates of the same epoch broadcasted by 2f+1 blockchain replica nodes.

The embodiments of the present disclosure further provide a computer device, which includes a memory, a processor and a computer program stored in the memory and executable on the processor, and the processor implements the blockchain consensus method when executing the computer program.

The embodiments of the present disclosure further provide a computer-readable storage medium, where the computer-readable storage medium stores a computer program which, when executed by a processor, implements the blockchain consensus method.

The embodiments of the present disclosure further provide a computer program product, where the computer program product includes a computer program which, when executed by a processor, implements the blockchain consensus method.

The embodiments of the present disclosure broadcast, by each blockchain replica node in an asynchronous network, a proposal message corresponding to the blockchain replica node in a current epoch corresponding to the blockchain replica node, form a weak certificate corresponding to the blockchain replica node in the current epoch after collecting signature voting information fed back by f+1 blockchain replica nodes based on the proposal message, and enter a next epoch after collecting the proposal messages broadcasted by 2f+1 blockchain replica nodes in the current epoch, where the proposal message corresponding to the blockchain replica node includes proposal information selected from a pending transaction queue in the current epoch, and a blockchain includes 3f+1 blockchain replica nodes; and perform, for each blockchain replica node in the asynchronous network, a blockchain consensus after receiving the weak certificates of the same epoch broadcasted by 2f+1 blockchain replica nodes. In the embodiments of the present disclosure, the parallel transaction transmission is no longer the bottleneck of the consensus efficiency; the proposal message corresponding to each blockchain replica node is broadcasted for the each blockchain replica node in the asynchronous network in the current epoch, the weak certificate corresponding to the blockchain replica node in the current epoch is formed after collecting the signature voting information fed back by f+1 blockchain replica nodes based on the proposal message, and the next epoch is entered after collecting the proposal messages broadcasted by 2f+1 blockchain replica nodes in the current epoch; and then the blockchain consensus is performed for each blockchain replica node in the asynchronous network after receiving the weak certificates of the same epoch broadcasted by 2f +1 blockchain replica nodes. That is, the consensus on the packaged transactions from 2f+1 blockchain replica nodes can be completed by just using one BFT consensus instance, which effectively improves the consensus efficiency and the transaction throughput.

### BRIEF DESCRIPTION OF THE DRAWINGS

In order to illustrate the technical solutions in the embodiments of the present disclosure more clearly, the drawings to be used in the description of the embodiments will be briefly introduced below. Obviously, the drawings in the following description only illustrate some embodiments of the present disclosure, and those of ordinary skill in the art may obtain other drawings from them without paying any inventive effort. In the drawings:
FIG 1 illustrates a schematic diagram of a blockchain consensus method according to an embodiment of the present disclosure;
FIG 2 illustrates a schematic diagram of a transaction transmission part according to an embodiment of the present disclosure;
FIG 3 illustrates a schematic diagram of pseudo codes of a transaction transmission part according to an embodiment of the present disclosure;
FIG 4 illustrates a schematic diagram of a node consensus part according to an embodiment of the present disclosure;
FIG 5 illustrates a schematic diagram of pseudo codes of a node consensus part according to an embodiment of the present disclosure;
FIG 6 illustrates a structural diagram of a blockchain consensus apparatus according to an embodiment of the present disclosure; and
FIG 7 illustrates a structural diagram of a computer device according to an embodiment of the present disclosure.

### DESCRIPTION OF THE EMBODIMENTS

In order that the objectives, technical solutions and advantages of the embodiments of the present disclosure are clearer, the embodiments of the present disclosure are further described in detail as follows with reference to the drawings. Here, the exemplary embodiments of the present disclosure and the description thereof are used to illustrate the present disclosure, rather than being limitations thereto.

As mentioned above, in the existing BFT protocol, no matter how many rounds of voting are needed to reach a consensus, the leader needs to collect at least 2f+1 votes from different replicas to form a certificate for a block, which has the problems of a low consensus efficiency and a low transaction throughput.

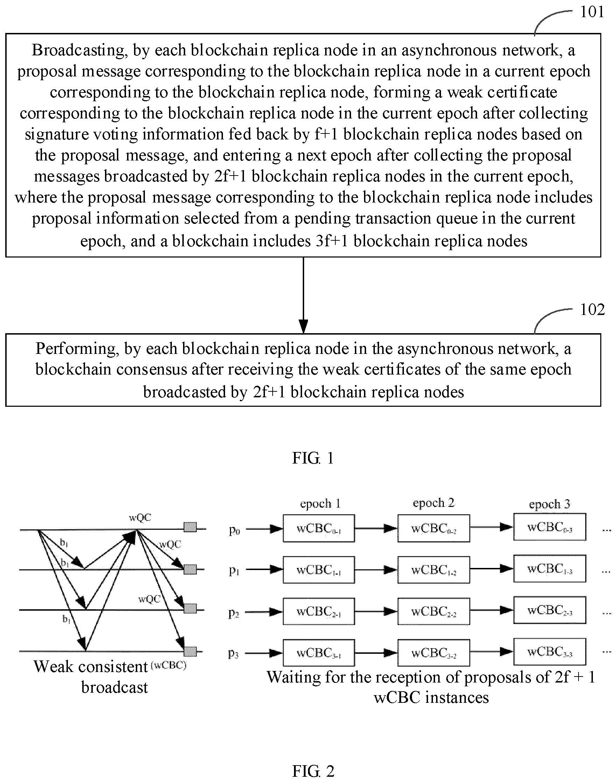

In order to achieve the blockchain consensus and improve the consensus efficiency and the transaction throughput, the embodiments of the present disclosure provide a blockchain consensus method as illustrated in FIG 1, which may include:
Step 101: broadcasting, by each blockchain replica node in an asynchronous network, a proposal message corresponding to the blockchain replica node in a current epoch corresponding to the blockchain replica node, forming a weak certificate corresponding to the blockchain replica node in the current epoch after collecting signature voting information fed back by f+1 blockchain replica nodes based on the proposal message, and entering a next epoch after collecting the proposal messages broadcasted by 2f+1 blockchain replica nodes in the current epoch, where the proposal message corresponding to the blockchain replica node includes proposal information selected from a pending transaction queue in the current epoch, and a blockchain includes 3f+1 blockchain replica nodes; and
Step 102: performing, by each blockchain replica node in the asynchronous network, a blockchain consensus after receiving the weak certificates of the same epoch broadcasted by 2f+1 blockchain replica nodes.

As illustrated in FIG 1, the embodiments of the present disclosure broadcast, for each blockchain replica node in an asynchronous network, a proposal message corresponding to the blockchain replica node in a current epoch corresponding to the blockchain replica node, form a weak certificate corresponding to the blockchain replica node in the current epoch after collecting signature voting information fed back by f+1 blockchain replica nodes based on the proposal message, and enter a next epoch after collecting the proposal messages broadcasted by 2f+1 blockchain replica nodes in the current epoch, where the proposal message corresponding to the blockchain replica node includes proposal information selected from a pending transaction queue in the current epoch, and a blockchain includes 3f+1 blockchain replica nodes; and perform, for each blockchain replica node in the asynchronous network, a blockchain consensus after receiving the weak certificates of the same epoch broadcasted by 2f+1 blockchain replica nodes. In the embodiments of the present disclosure, the parallel transaction transmission is no longer the bottleneck of the consensus efficiency; the proposal message corresponding to each blockchain replica node is broadcasted for each blockchain replica node in the asynchronous network in the current epoch, the weak certificate corresponding to the blockchain replica node in the current epoch is formed after collecting the signature voting information fed back by f+1 blockchain replica nodes based on the proposal message, and the next epoch is entered after collecting the proposal messages broadcasted by 2f+1 blockchain replica nodes in the current epoch; and then the blockchain consensus is performed for each blockchain replica node in the asynchronous network after receiving the weak certificates of the same epoch broadcasted by 2f+1 blockchain replica nodes. That is, the consensus on the packaged transactions from 2f+1 blockchain replica nodes can be completed by just using one BFT consensus instance, which effectively improves the consensus efficiency and the transaction throughput.

The inventor finds that the weak certificate (only including f+1 votes) may be used to construct an efficient BFT framework (Star). Star completely separates the process of the batch transaction transmission from the process of realizing consistency between the consensus instances, so that the parallel transaction transmission is no longer the bottleneck of the efficiency of the consensus system. In a transaction transmission stage, Star allows a streamlined transaction transmission. In a consensus stage, Star can complete the consensus on the packaged transactions from n-f (i.e., n minus f) replicas in parallel by just using one BFT consensus instance, thereby greatly improving the consensus efficiency. Compared with other consensus frameworks of the same category, Star achieves lower communication complexity and message complexity (O(n²)). BFT network models may be classified into a synchronous network, a semi-asynchronous network and an asynchronous network. Star is a consensus framework that can be used in different network environments.

Next, each step is analyzed in detail.

In the step 101: broadcasting, by each blockchain replica node in an asynchronous network, a proposal message corresponding to the blockchain replica node in a current epoch corresponding to the blockchain replica node, forming a weak certificate corresponding to the blockchain replica node in the current epoch after collecting signature voting information fed back by f+1 blockchain replica nodes based on the proposal message, and entering a next epoch after collecting the proposal messages broadcasted by 2f+1 blockchain replica nodes in the current epoch, where the proposal message corresponding to the blockchain replica node includes proposal information selected from a pending transaction queue in the current epoch, and a blockchain includes 3f+1 blockchain replica nodes.

In an embodiment, the broadcasting a proposal message corresponding to the blockchain replica node in a current epoch corresponding to the blockchain replica node includes:
broadcasting the proposal message corresponding to the blockchain replica node in the current epoch corresponding to the blockchain replica node by using a preset consensus protocol transaction broadcast mode, where the consensus protocol transaction broadcast mode includes a chain mode and a non-chain mode;
if the consensus protocol transaction broadcast mode is the chain mode, the proposal message corresponding to the blockchain replica node further includes a weak certificate corresponding to the blockchain replica node in a previous epoch, and the weak certificate corresponding to the blockchain replica node in the current epoch is included in a proposal message broadcasted in a next epoch; and
if the consensus protocol transaction broadcast mode is the non-chain mode, broadcasting immediately after forming the weak certificate corresponding to the blockchain replica node in the current epoch.

In an embodiment, the proposal information selected from the pending transaction queue in the current epoch includes:
proposal information selected by the blockchain replica node from the pending transaction queue in the current epoch by using a combined select algorithm of a random select algorithm and a first-in first-out (FIFO) algorithm.

In an embodiment, the blockchain consensus method further includes:
Sending, by each blockchain replica node in the asynchronous network, signature voting information corresponding to proposal message to other blockchain replica nodes when receiving proposal messages broadcasted by said other blockchain replica nodes.

A specific embodiment is given below to illustrate a workflow of a transaction transmission part of the present disclosure.

FIG 2 illustrates a schematic diagram of a transaction transmission part according to an embodiment of the present disclosure. As illustrated in FIG 2, a transaction transmission is performed for each epoch, and transaction transmission processes are completely parallel, so that working can be carried out in an asynchronous network. In each epoch, all replicas can package transactions and propose their own proposals, collect f+1 votes to form weak certificates, and broadcast the weak certificates. For each replica, this process is called a weak consistent broadcast (wCBC). Each epoch consists of n parallel wCBC instances. In each epoch, when receiving 2f+1 proposals from different replicas and a weak certificate of a proposal proposed by itself, the replica enters the next epoch and continues to propose a new transaction proposal. On this basis, our protocol supports the streamlined transaction processing, which combines the broadcasting of the weak certificate of each epoch with the broadcasting of the proposal of the next epoch.

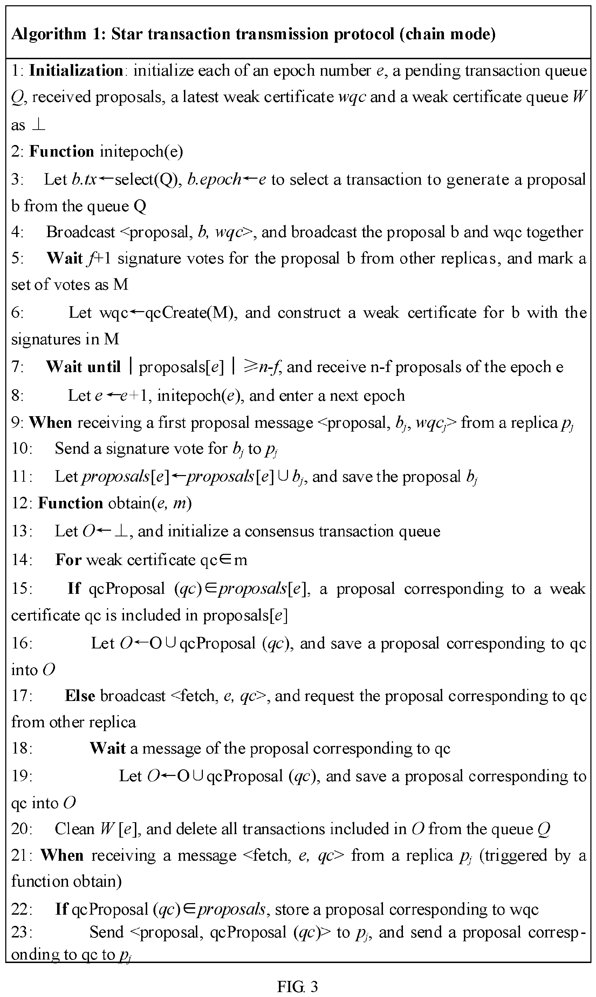

FIG 3 illustrates a schematic diagram of pseudo codes of a transaction transmission part according to an embodiment of the present disclosure. As illustrated in FIG 3, each replica *pi* (*i* ∈[0...n-1]) runs initepoch(e) to start a new epoch e. The replica *pi* runs a select algorithm on a pending transaction queue Q, and selects a group of transactions from Q as a proposal, i.e., *b* in the codes. In order to ensure the protocol activity, the select algorithm combines a random select algorithm and the classic first-in first-out (FIFO) algorithm. Next, *pi* broadcasts a message <proposal, b, wqc> and its proposal. In this embodiment, wqc is a weak certificate (wQC) formed in an epoch e-1. In a case of the non-chain mode, wqc is ⊥. After receiving <proposal, bj, wqcj>, each replica firstly verifies that wqcj is a valid wQC, sends a signature vote for b to pj, saves *b* in *proposals,* and saves wqcj in W[e-1]. *pi* needs to wait for f+1 votes for b to form wQC and save it as wqc. Next, after receiving n-f (i.e., n minus f) proposals of current epochs, *pi* enters a next epoch, i.e., epoch e+1.

Step 102: performing, by each blockchain replica node in the asynchronous network, a blockchain consensus after receiving the weak certificates of the same epoch broadcasted by 2f+1 blockchain replica nodes.

In an embodiment, performing a blockchain consensus for each blockchain replica node in the asynchronous network after receiving the weak certificates of the same epoch broadcasted by 2f+1 blockchain replica nodes includes:
performing, by each blockchain replica node in the asynchronous network, a blockchain consensus by taking the received the weak certificates of the same epoch broadcasted by 2f+1 blockchain replica nodes as an input of a consensus protocol, where the consensus protocol uses events of a-broadcast and a-deliver to describe primitives of a blockchain consensus process; and
obtaining, for weak certificates for which a consensus has been reached, corresponding proposal information by using an obtain algorithm, and making a transaction according to the proposal information.

During implementation, it is necessary to wait for the reception of 2f+1 weak certificates formed in the same epoch and then perform a consensus on these certificates. That is, the replica saves a variable of le, after receiving 2f+1 weak certificates formed in the epoch le, performs a consensus on these certificates and updates le to le+1.

A specific embodiment is given below to illustrate a workflow of a node consensus part of the present disclosure.

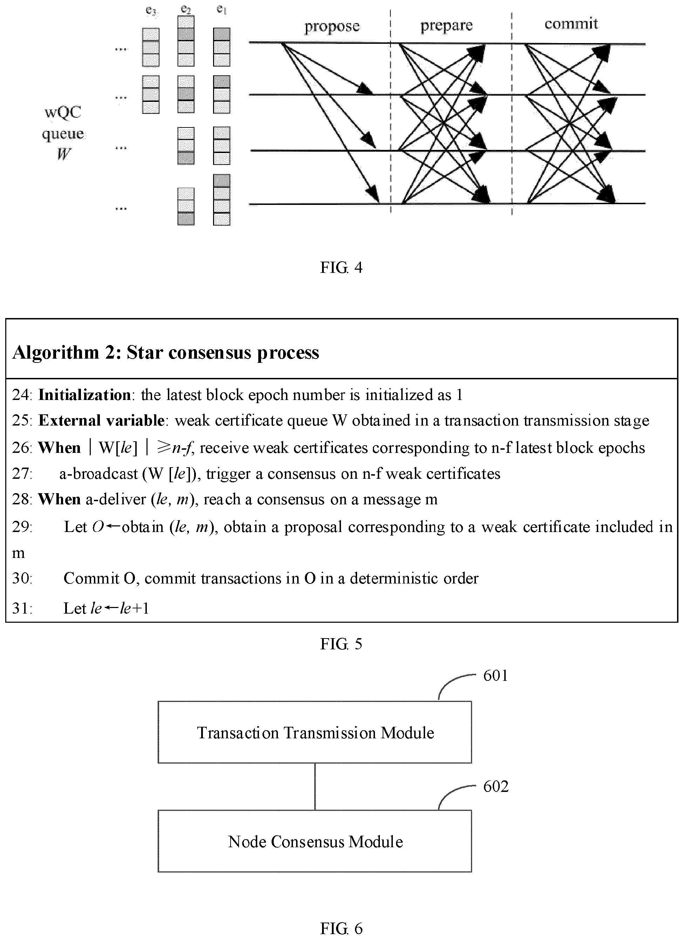

FIG 4 illustrates a schematic diagram of a node consensus part according to an embodiment of the present disclosure. As illustrated in FIG 4, there is only one consensus instance in a consensus stage in each epoch. It is unnecessary to send specific transaction data during the operation of a consensus protocol, and only n-f (i.e., n minus f) weak certificates formed in the current epoch received by each replica are used as an input. The consensus protocol can ensure that a consensus can be reached on the consensus proposals packaged from at least n-f (i.e., n minus f) replicas. The consensus instance may use any consensus (semi-synchronous or asynchronous consensus). The embodiments of the present disclosure provide a variant protocol of PBFT (Practical Byzantine Fault Tolerance), which describes the primitives in the consensus process by using two events, i.e., a-broadcast and a-deliver, and the a-broadcast and the a-deliver are corresponding to a trigger (the nodes starts to put forward proposals) and an end (the nodes reach a consensus) of the consensus respectively.

FIG 5 illustrates a schematic diagram of pseudo codes of a node consensus part according to an embodiment of the present disclosure. As illustrated in FIG 5, the consensus stage is carried out based on epochs, and only one BFT instance is used in each epoch to reach a consensus on n-f (i.e., n minus f) wQCs. Any BFT protocol can be used in this process. A blockchain consensus is performed by using weak certificates formed by 2f+1 blockchain replica nodes selected from an asynchronous network in a current epoch as an input of a consensus protocol, where the consensus protocol uses events of a-broadcast and a-deliver to describe primitives of a blockchain consensus process, then corresponding proposal information for the weak certificates for which a consensus has been reached is obtained by using an obtain algorithm, and a transaction is made according to the proposal information. In this embodiment, the obtain algorithm receives a message m composed of a group of wQCs having reached a consensus in the consensus process as an input, and outputs all transactions included in the proposals corresponding to these weak certificates. In FIG 5, the primitives of a-broadcast and a-deliver in atomic broadcasting are used. Each replica *pi* needs to save a current epoch value le. *pi* monitors its queue W (i.e., the weak certificate obtained during transaction transmission) and checks whether W[le] includes n-f weak certificates. If so, the replica runs a-broadcast (W[le]). In this embodiment, if the BFT protocol is leader-based, only the leader broadcasts W[le]. When the primitive a-deliver is terminated, for all the weak certificates having reached a consensus of a-deliver, each replica obtains all the corresponding proposals by the obtain algorithm, and executes all the transactions included in the proposals in a deterministic order.

The advantages of two parts of the transaction transmission and the node consensus included in the consensus framework according to the embodiment of the present disclosure are as follows:
(1) In the transaction transmission stage, the process of the batch transaction transmission is completely separated from the process of realizing consistency between the consensus instances, so that the parallel transaction transmission is no longer the bottleneck of the efficiency of the consensus system, and a streamlined transmission of transactions is allowed.
(2) In the consensus stage, it is possible to complete the consensus on the packaged transactions from n-f (i.e., n minus f) replicas in parallel by just using one BFT consensus instance, thereby greatly improving the consensus efficiency.
(3) The existing consensus protocols are combined to obtain a new protocol with higher efficiency and network adaptability. Taking the PBFT consensus as an example, the transaction throughput is at least one order of magnitude higher than that of the existing BFT protocol after the instantiation with the Star framework.

Based on the same inventive concept, the embodiments of the present disclosure further provide a blockchain consensus apparatus as described below. Since principles for the blockchain consensus apparatus to solve the problems are similar to those for the blockchain consensus method, the implementations of the blockchain consensus apparatus can refer to those of the blockchain consensus, and the repeated contents are omitted.

FIG 6 illustrates a structural diagram of a blockchain consensus apparatus according to an embodiment of the present disclosure. As illustrated in FIG 6, the blockchain consensus apparatus includes:
a transaction transmission module 601 configured to broadcast, by each blockchain replica node in an asynchronous network, a proposal message corresponding to the blockchain replica node in a current epoch corresponding to the blockchain replica node, form a weak certificate corresponding to the blockchain replica node in the current epoch after collecting signature voting information fed back by f+1 blockchain replica nodes based on the proposal message, and enter a next epoch after collecting the proposal messages broadcasted by 2f+1 blockchain replica nodes in the current epoch, where the proposal message corresponding to the blockchain replica node includes proposal information selected from a pending transaction queue in the current epoch, and a blockchain includes 3f+1 blockchain replica nodes; and
a node consensus module 602 configured to perform a blockchain consensus based on the weak certificates that are formed in the current epoch and formed by 2f+1blockchain replica nodes selected from the asynchronous network.

In an embodiment, the transaction transmission module 601 is further configured to:
broadcast the proposal message corresponding to the blockchain replica node in the current epoch corresponding to the blockchain replica node by using a preset consensus protocol transaction broadcast mode, and the consensus protocol transaction broadcast mode includes a chain mode and a non-chain mode;
if the consensus protocol transaction broadcast mode is the chain mode, the proposal message corresponding to the blockchain replica node further includes a weak certificate corresponding to the blockchain replica node in a previous epoch, and the weak certificate corresponding to the blockchain replica node in the current epoch is included in a proposal message broadcasted in a next epoch; and
if the consensus protocol transaction broadcast mode is the non-chain mode, broadcast immediately after forming the weak certificate corresponding to the blockchain replica node in the current epoch.

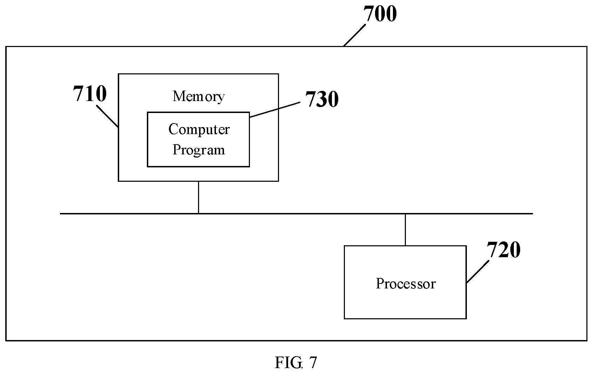

Based on the aforementioned inventive concept, as illustrated in FIG 7, the embodiments of the present disclosure further provide a computer device 700, which includes a memory 710, a processor 720 and a computer program 730 stored in the memory 710 and executable on the processor 720, and the processor 720 implements the above blockchain consensus method when executing the computer program 730.

Based on the aforementioned inventive concept, the embodiments of the present disclosure further provide a computer-readable storage medium, and the computer-readable storage medium stores a computer program, and when executed by a processor, the computer program implements the blockchain consensus method.

The embodiments of the present disclosure further provide a computer program product, and the computer program product includes a computer program, and when executed by a processor, the computer program implements the blockchain consensus method.

The embodiments of the present disclosure broadcast, by each blockchain replica node in an asynchronous network, broadcast a proposal message corresponding to the blockchain replica node in a current epoch corresponding to the blockchain replica node, form a weak certificate corresponding to the blockchain replica node in the current epoch after collecting signature voting information fed back by f+1 blockchain replica nodes based on the proposal message, and enter a next epoch after collecting the proposal messages broadcasted by 2f+1 blockchain replica nodes in the current epoch, where the proposal message corresponding to the blockchain replica node includes proposal information selected from a pending transaction queue in the current epoch, and a blockchain includes 3f+1 blockchain replica nodes; and perform, for each blockchain replica node in the asynchronous network, a blockchain consensus after receiving the weak certificates of the same epoch broadcasted by 2f+1 blockchain replica nodes. In the embodiments of the present disclosure, the parallel transaction transmission is no longer the bottleneck of the consensus efficiency; the proposal message corresponding to each blockchain replica node is broadcasted for each blockchain replica node in the asynchronous network in the current epoch, the weak certificate corresponding to the blockchain replica node in the current epoch is formed after collecting the signature voting information fed back by f+1 blockchain replica nodes based on the proposal message, and the next epoch is entered after collecting the proposal messages broadcasted by 2f+1 blockchain replica nodes in the current epoch; and then the blockchain consensus is performed for each blockchain replica node in the asynchronous network after receiving the weak certificates of the same epoch broadcasted by 2f+1 blockchain replica nodes. That is, the consensus on the packaged transactions from 2f+1 blockchain replica nodes can be completed by just using one BFT consensus instance, which effectively improves the consensus efficiency and the transaction throughput.

Those skilled in the art should appreciate that any embodiment of the present disclosure may be provided as a method, a system or a computer program product. Therefore, the present disclosure can take the form of a full hardware embodiment, a full software embodiment, or an embodiment combining software and hardware. Moreover, the present disclosure may take the form of a computer program product implemented on one or more computer usable storage mediums (including, but not limited to, a magnetic disc memory, CD-ROM, optical storage, etc.) including therein computer usable program codes.

The present disclosure is described with reference to a flowchart and/or a block diagram of the method, apparatus (system) and computer program product according to the embodiments of the present disclosure. It shall be appreciated that each flow and/or block in the flowchart and/or the block diagram and a combination of flows and/or blocks in the flowchart and/or the block diagram may be realized by computer program instructions. Those computer program instructions may be provided to a general computer, a dedicated computer, an embedded processor or a processor of other programmable data processing device to produce a machine, so that the instructions executed by the processor of the computer or other programmable data processing device produce apparatus for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

The above specific embodiments further make detailed illustrations to the objectives, technical solutions and advantageous effects of the present disclosure. It should be understood that those described above are only specific embodiments of the present disclosure and are not intended to limit the protection scope of the present disclosure. Any modification, equivalent substitution or improvement made within the spirit and principle of the present disclosure should fall within the protection scope of the present disclosure.

## Claims

1. A blockchain consensus method, comprising:
broadcasting, by each blockchain replica node in an asynchronous network, a proposal message corresponding to the blockchain replica node in a current epoch corresponding to the blockchain replica node, forming a weak certificate corresponding to the blockchain replica node in the current epoch after collecting signature voting information fed back by f+1 blockchain replica nodes based on the proposal message, and entering a next epoch after collecting the proposal messages broadcasted by 2f+1 blockchain replica nodes in the current epoch, wherein the proposal message corresponding to the blockchain replica node comprises proposal information selected from a pending transaction queue in the current epoch, and a blockchain comprises 3f+1 blockchain replica nodes; and
performing, by each blockchain replica node in the asynchronous network, a blockchain consensus after receiving the weak certificates of the same epoch broadcasted by 2f+1 blockchain replica nodes.

2. The blockchain consensus method according to claim 1, wherein the broadcasting the proposal message corresponding to the blockchain replica node in the current epoch corresponding to the blockchain replica node comprises:
broadcasting the proposal message corresponding to the blockchain replica node in the current epoch corresponding to the blockchain replica node by using a preset consensus protocol transaction broadcast mode, wherein the consensus protocol transaction broadcast mode comprises a chain mode and a non-chain mode;
if the consensus protocol transaction broadcast mode is the chain mode, the proposal message corresponding to the blockchain replica node further comprises a weak certificate corresponding to the blockchain replica node in a previous epoch, and the weak certificate corresponding to the blockchain replica node in the current epoch is comprised in a proposal message broadcasted in a next epoch; and
if the consensus protocol transaction broadcast mode is the non-chain mode, broadcasting immediately after forming the weak certificate corresponding to the blockchain replica node in the current epoch.

3. The blockchain consensus method according to claim 1, wherein the proposal information selected from the pending transaction queue in the current epoch comprises:
proposal information selected by the blockchain replica node from the pending transaction queue in the current epoch by using a combined select algorithm of a random select algorithm and a first-in first-out (FIFO) algorithm.

4. The blockchain consensus method according to claim 1, further comprising:
sending, by each blockchain replica node in the asynchronous network, signature voting information corresponding to proposal message to other blockchain replica nodes when receiving proposal messages broadcasted by said other blockchain replica nodes.

5. The blockchain consensus method according to claim 1, wherein performing the blockchain consensus by each blockchain replica node in the asynchronous network after receiving the weak certificates of the same epoch broadcasted by 2f+ 1 blockchain replica nodes comprises:
performing, by each blockchain replica node in the asynchronous network, a blockchain consensus by taking the received the weak certificates of the same epoch broadcasted by 2f+1 blockchain replica nodes as an input of a consensus protocol, wherein the consensus protocol uses events of a-broadcast and a-deliver to describe primitives of a blockchain consensus process; and
obtaining, for weak certificates for which a consensus has been reached, corresponding proposal information by using an obtain algorithm, and making a transaction according to the proposal information.

6. A computer device, comprising a memory, a processor and a computer program stored in the memory and executable on the processor, wherein when executing the computer program, the processor implements a blockchain consensus method comprising:
broadcasting, by each blockchain replica node in an asynchronous network, a proposal message corresponding to the blockchain replica node in a current epoch corresponding to the blockchain replica node, forming a weak certificate corresponding to the blockchain replica node in the current epoch after collecting signature voting information fed back by f+1 blockchain replica nodes based on the proposal message, and entering a next epoch after collecting the proposal messages broadcasted by 2f+1 blockchain replica nodes in the current epoch, wherein the proposal message corresponding to the blockchain replica node comprises proposal information selected from a pending transaction queue in the current epoch, and a blockchain comprises 3f+1 blockchain replica nodes; and
performing, by each blockchain replica node in the asynchronous network, a blockchain consensus after receiving the weak certificates of the same epoch broadcasted by 2f+1 blockchain replica nodes.

7. The computer device according to claim 6, wherein the broadcasting the proposal message corresponding to the blockchain replica node in the current epoch corresponding to the blockchain replica node comprises:
broadcasting the proposal message corresponding to the blockchain replica node in the current epoch corresponding to the blockchain replica node by using a preset consensus protocol transaction broadcast mode, wherein the consensus protocol transaction broadcast mode comprises a chain mode and a non-chain mode;
if the consensus protocol transaction broadcast mode is the chain mode, the proposal message corresponding to the blockchain replica node further comprises a weak certificate corresponding to the blockchain replica node in a previous epoch, and the weak certificate corresponding to the blockchain replica node in the current epoch is comprised in a proposal message broadcasted in a next epoch; and
if the consensus protocol transaction broadcast mode is the non-chain mode, broadcasting immediately after forming the weak certificate corresponding to the blockchain replica node in the current epoch.

8. The computer device according to claim 6, wherein the proposal information selected from the pending transaction queue in the current epoch comprises:
proposal information selected by the blockchain replica node from the pending transaction queue in the current epoch by using a combined select algorithm of a random select algorithm and a first-in first-out (FIFO) algorithm.

9. The computer device according to claim 6, further comprising:
sending, by each blockchain replica node in the asynchronous network, signature voting information corresponding to proposal message to other blockchain replica nodes when receiving proposal messages broadcasted by said other blockchain replica nodes.

10. The computer device according to claim 6, wherein performing a blockchain consensus for each blockchain replica node in the asynchronous network after receiving the weak certificates of the same epoch broadcasted by 2f+1 blockchain replica nodes comprises:
performing, by each blockchain replica node in the asynchronous network, a blockchain consensus by taking the received the weak certificates of the same epoch broadcasted by 2f+1 blockchain replica nodes as an input of a consensus protocol, wherein the consensus protocol uses events of a-broadcast and a-deliver to describe primitives of a blockchain consensus process; and
obtaining, for weak certificates for which a consensus has been reached, corresponding proposal information by using an obtain algorithm, and making a transaction according to the proposal information.

11. A computer-readable storage medium, wherein the computer-readable storage medium stores a computer program, and when executed by a processor, the computer program implements a blockchain consensus method comprising:
broadcasting, by each blockchain replica node in an asynchronous network, a proposal message corresponding to the blockchain replica node in a current epoch corresponding to the blockchain replica node, forming a weak certificate corresponding to the blockchain replica node in the current epoch after collecting signature voting information fed back by f+1 blockchain replica nodes based on the proposal message, and entering a next epoch after collecting the proposal messages broadcasted by 2f+1 blockchain replica nodes in the current epoch, wherein the proposal message corresponding to the blockchain replica node comprises proposal information selected from a pending transaction queue in the current epoch, and a blockchain comprises 3f+1 blockchain replica nodes; and
performing, by each blockchain replica node in the asynchronous network, a blockchain consensus after receiving the weak certificates of the same epoch broadcasted by 2f+1 blockchain replica nodes.

12. The computer-readable storage medium according to claim 11, wherein the broadcasting the proposal message corresponding to the blockchain replica node in the current epoch corresponding to the blockchain replica node comprises:
broadcasting the proposal message corresponding to the blockchain replica node in the current epoch corresponding to the blockchain replica node by using a preset consensus protocol transaction broadcast mode, wherein the consensus protocol transaction broadcast mode comprises a chain mode and a non-chain mode;
if the consensus protocol transaction broadcast mode is the chain mode, the proposal message corresponding to the blockchain replica node further comprises a weak certificate corresponding to the blockchain replica node in a previous epoch, and the weak certificate corresponding to the blockchain replica node in the current epoch is comprised in a proposal message broadcasted in a next epoch; and
if the consensus protocol transaction broadcast mode is the non-chain mode, broadcasting immediately after forming the weak certificate corresponding to the blockchain replica node in the current epoch.

13. The computer-readable storage medium according to claim 11, wherein the proposal information selected from the pending transaction queue in the current epoch comprises:
proposal information selected by the blockchain replica node from the pending transaction queue in the current epoch by using a combined select algorithm of a random select algorithm and a first-in first-out (FIFO) algorithm.

14. The computer-readable storage medium according to claim 11, further comprising:
sending, by each blockchain replica node in the asynchronous network, signature voting information corresponding to proposal message to other blockchain replica nodes when receiving proposal messages broadcasted by said other blockchain replica nodes.

15. The computer-readable storage medium according to claim 11, performing the blockchain consensus by each blockchain replica node in the asynchronous network after receiving the weak certificates of the same epoch broadcasted by 2f+ 1 blockchain replica nodes comprises:
performing, by each blockchain replica node in the asynchronous network, a blockchain consensus by taking the received the weak certificates of the same epoch broadcasted by 2f+ 1 blockchain replica nodes as an input of a consensus protocol, wherein the consensus protocol uses events of a-broadcast and a-deliver to describe primitives of a blockchain consensus process; and
obtaining, for weak certificates for which a consensus has been reached, corresponding proposal information by using an obtain algorithm, and making a transaction according to the proposal information.
